# EUROPEAN PATENT SPECIFICATION

(11) **EP 0 689 762 B1**
(45) Date of publication and mention of the grant of the patent: **23.08.2000**
(21) Application number: 95201720.0
(22) Date of filing: 23.06.1995
(51) Int. Cl.: A01K 1/12, A01J 5/017

(54) **An implement for automatically milking animals**
Gerät zum automatischen Melken von Tieren
Dispositif de traite automatique d'animaux

(30) Priority: 28.06.1994 NL 9401069
(43) Date of publication of application: 03.01.1996
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 091 892
- FR-A- 2 128 901

## Description

The present invention relates to a construction as described in the preamble of claim 1.

Such a construction is known from document EP-A-0 091 892. From this document there is known a rotatable milking platform with a stationary robot adapted to apply milking means to a cow's teats. Once the milking means have been connected to the teats, driving means are actuated to turn the platform so that this will advance one step. When the next stall attains its position the gates of the stall will open so that the next cow can go into the stall, whereafter the robot applies the milking means to the cow's teats. The above-described construction has the disadvantage that the robot is out of operation during the time that the platform is rotating.

It is an object of the invention to have a construction as described in the preamble of claim 1 which has a higher capacity.

The invention has for its objective to provide an implement of the above type, by means of which relatively many animals can be milked in a short time.

According to the invention, this is achieved by the features as defined in the characterizing part of claim 1. By this, the milking robots can be used optimally, because the capacity of the milking robots is the limitative factor for the number of animals to be milked per unit of time, which is contrary to the well-known milking robot, wherein the milking time of an animal to be milked is generally the limitative factor.

According to a further feature of the invention, the distance over which the milking robot is movable amounts to approximately the length of two milking parlours. According to a further feature of the invention, the entrance to the movable floor is provided near the location where the milking robot is placed. When an animal has entered the milking parlour via the entrance to the movable floor, the teat cups are connected to the teats of the animal by means of the milking robot, while both the milking robot and the animal are being propelled. Over a length of approximately two milking parlours, the milking robot thus has the capability of connecting the teat cups to the teats, whereas, upon completion of this connection, the milking robot returns to the point of departure, whereupon a following milking cluster can be connected to a second animal. According to a further feature of the invention, in the vicinity of the entrance there is provided at least one cleaning box for cleaning the teats of an animal. The time which an animal spends waiting for the purpose of subsequently being enabled to enter a free milking parlour on the movable floor can thus be utilized for cleaning the teats of an animal. In an exemplary embodiment of the invention, near the entrance there are provided two cleaning boxes situated side by side. Owing to this, the flow to the milking parlour can take place at an even higher rate, which results in a higher capacity.

In a preferred embodiment of the invention, the implement comprises a rotary platform provided with at least one milking parlour as well as a cleaning box for automatically cleaning the animal, or at least the teats. Before an animal enters the milking parlour, its teats are automatically cleaned in the cleaning box, so that at the instant when a milking parlour is free, then the animal can directly set foot on the platform, as a result of which no valuable time is wasted. Another animal can subsequently enter the cleaning box, whereupon the above-mentioned cycle repeats itself.

According to a further feature of the invention, the construction comprises a number of milking parlours as well as a number of detectors for determining the teat positions of an animal, with the number of milking parlours being equal or approximately equal to the number of detectors. If the teat cups should be connected anew in a milking parlour, e.g. in the event that a teat cup has been kicked off, then the position of the teat can be determined anew by means of the detector provided in the milking parlour and the teat cup be re-connected by means of the milking robot. According to a further feature of the invention, there is provided for cleaning the animal, or at least the teats at least one cleaning box linked up with the movable floor.

According to still another feature of the invention, the movable floor is bounded on both sides or on one side by a stationary or fixed wall. In an embodiment according to the invention, the walls are designed as a fencing. According to a further feature of the invention, the milking parlour is on the front side and on the rear side bounded by a wall which is moved along with the movable floor. According to a further aspect of the invention, the wall comprises a feed trough disposed at the front side of the milking parlour.

According to still another aspect of the invention, each milking parlour or a number of the milking parlours is provided with disconnection means for automatically disconnecting the teat cups simultaneously or individually. According to a further feature of the invention, the teat cups are placed on a load-bearing arm which is capable of being swung underneath the animal and is carried by the movable floor. According to another feature of the invention, the teat cups are placed on a movable conveyor to achieve this. According to a further feature of the invention, the construction is provided with cleaning means for cleaning the teat cups. Upon disconnection of the teat cups from the teats, the teat cups are automatically cleaned and possibly disinfected with the aid of the cleaning means, whereafter they can be connected anew to an animal to be milked.

According to a feature of the invention, the construction is further provided with an animal identification system comprising transponders disposed on the animals. With the animal identification system it is possible to determine whether an animal is to be admitted to the cleaning box and/or the milking parlour, and which amount of concentrates is to be supplied to the animal in the feed trough in the milking parlour.

According to a first exemplary embodiment of the invention, the movable floor is designed as a milking carrousel. According to a second exemplary embodiment of the invention, the movable floor is designed as a moving-carpet floor. According to a third exemplary embodiment of the invention, the construction comprises two moving-carpet floors disposed side by side at a certain distance from each other.

According to a further feature of the invention, on one end of the moving-carpet floor there is provided the entrance, whereas the exit is provided at the other end thereof.

According to still another feature of the invention, the implement is suitable for milking a herd of approximately 1,000 cows and/or for approximately 3,000 milkings in a period of 24 hours.

According to a further feature of the invention, the construction comprises a cowshed wherein the implement for milking animals is installed, with this shed being designed as a loose house. According to a further feature of the invention, the implement comprises a computer-controlled concentrates-proportioning system suitable for individually dispensing a defined amount of feeds to each animal.

The invention will now be further explained with reference to the accompanying drawings, in which:
Figure 1 shows a plan view of a first exemplary embodiment of a rotary platform with a milking robot and a cleaning box;
Figure 2 shows a plan view of a second exemplary embodiment of the invention comprising a rotary platform, a milking robot and two cleaning boxes;
Figure 3 shows a fourth exemplary embodiment of the invention, which includes two moving-carpet floors disposed parallel to each other at a certain mutual distance and each provided with a milking robot and a cleaning box.

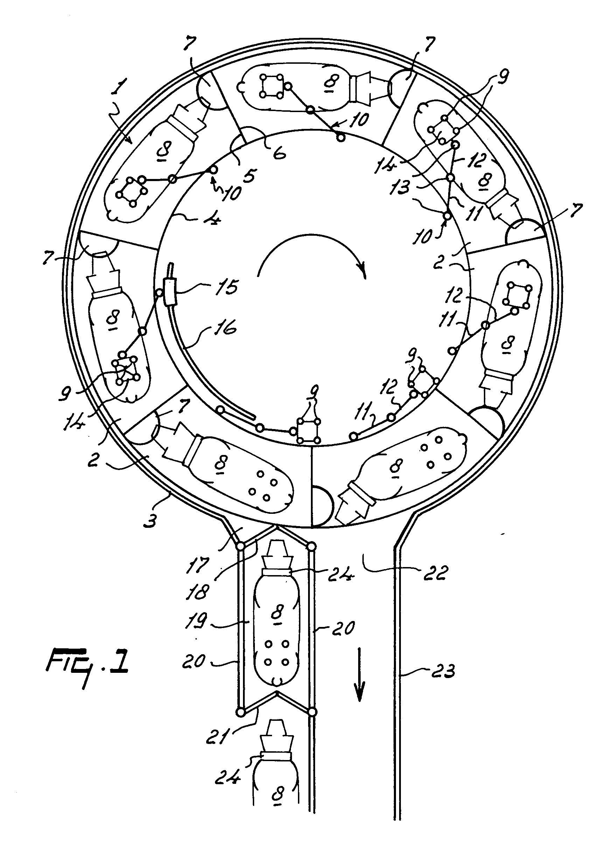

Figure 1 shows a plan view of a first exemplary embodiment of the invention, which includes a movable floor designed as a rotary platform 1 accommodating seven milking parlours 2. The rotary platform 1 comprises a fixed outer wall 3 and an inner wall 4 which moves along with the rotary platform 1. In the present embodiment of the invention, the outer wall 3 and the inner wall 4 are designed as a fencing. Each milking parlour 2 is bounded by a front wall 5 and a rear wall 6, with the front wall 5 of a milking parlour 2 being the rear wall 6 of the milking parlour 2 which lies in front. During operation, the walls 5 and 6 are moved along with the rotary platform 1. The front walls 5 are provided with a feed trough 7, in which an animal 8 receives feeds by means of a (non-shown) computer-controlled concentrates-proportioning system during the stay in a milking parlour 2. A milking parlour 2 further comprises four teat cups 9 placed on the end of a load-bearing arm 10. The load-bearing arm 10 is disposed near the inner wall 4 and it also turns along with the rotary platform 1. Each of the load-bearing arms 10 is composed of a first arm part 11 and a second arm part 12, each of which parts is provided with vertical hinge pins 13, the arrangement being such that the first arm part 11 is capable of pivoting relatively to a second arm part 12 and the load-bearing arm 10 is capable of being swung to underneath an animal 8 in a milking parlour 2. The teat cups 9 placed on a carrier 14 are also capable of pivoting on a vertical hinge pin 13 and relatively to the second arm part 12. Besides, each of the hinge pins 13 can comprise a (non-shown) stepping motor for the purpose of positioning the teat cups 9 under the animal 8 in an appropriate manner. For connection to, or disconnection from the teats, as the case may be, the teat cups 9 can be moved individually or simultaneously with respect to the carrier 14.

Furthermore, near the inner wall 4 there is placed a milking robot 15, by means of which the teat cups 9 can be automatically connected to the animals of an animal. For the purpose of finding the positions of an animal's teats, the milking robot 15 comprises a (non-shown) detector, such as a laser or ultrasound sensor. Moreover, the milking robot 15 is installed reciprocatingly on a rail track 16. The rail track 16 runs parallel to the curved inner wall 4, while its length roughly amounts to between 1.5 and 2 times the length of an inner wall of a milking parlour 2.

Near the location where the milking robot 15 is installed, there is connected to the outer wall 3 of the rotary platform 11 the entrance 17 to the milking parlours 2, which entrance is provided with a computer-controlled entrance door 18. The construction comprises, connected to the entrance door 18, a cleaning box 19 for cleaning the teats of an animal to be milked. The cleaning box 19 is bounded on both sides by a fencing 20 and comprises an entrance door 21 which is also computer-controlled. Next to the entrance door 18 to the milking parlours 2 there is an exit 22, through which the animals 8 can leave the rotary platform 1 after they have been milked. The exit 22 is also bounded by a fencing 23.

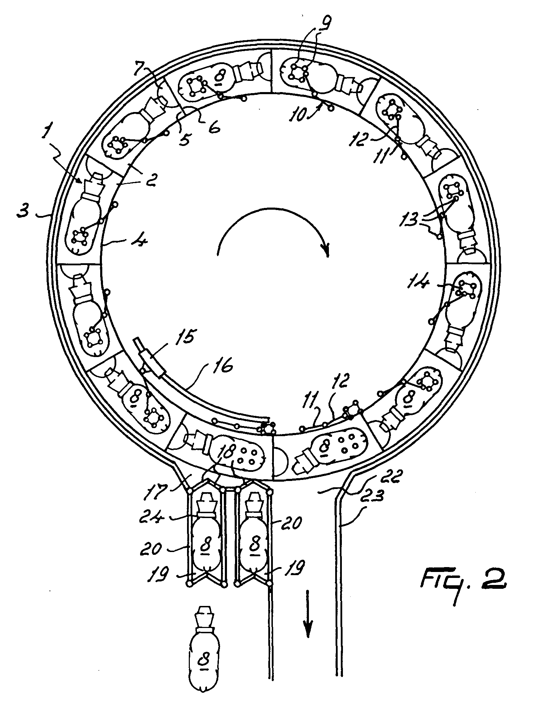

Figure 2 represents a second exemplary embodiment of the construction according to the invention which, in broad outlines, is similar to that of Figure 1, on account of which corresponding parts have been given the same reference numbers. In Figure 2, the rotary platform 1 comprises twelve milking parlours 2 and the milking robot 15 is placed on a rail track 16 of a length which is twice that of a milking parlour 2. Moreover, the construction comprises two cleaning boxes 19 situated side by side near the entrance 17 to the rotary platform 1. Each of the cleaning boxes 19 is provided with computer-controlled entrance doors 18 and 21, as already has been described for the first exemplary embodiment.

Notwithstanding the fact that it is not represented in the exemplary embodiments of Figures 1 and 2, it is also feasible to place a plurality of robots 15 along the inner wall, instead of one robot 15, and to increase the number of milking parlours 2, if necessary.

The embodiment according to Figure 1 permits a herd of about 500 cows to be milked every 24 hours, where the time taken to connect the teat cups 9 to the teats of an animal to be milked amounts to about one minute and the milking time per animal amounts to five minutes, while the turn-round time, i.e. the time in which a milking parlour 2 travels from the entrance 17 to the exit 22, amounts to about seven minutes.

The construction according to the second exemplary (Figure 2) permits a herd of about 1,000 cows to be milked every 24 hours, where the time for teat-cup connection amounts to about half a minute and the milking time of an animal amounts to about five minutes, while the turn-round time amounts to six minutes.

The operation of the above-mentioned embodiments is as follows. After an animal has reported itself at the entrance door 21 to a cleaning box 19, the identity of the animal 8 is established by means of a transponder 24 disposed on an animal 8 and a (non-shown) animal identification system, whereupon it is checked by a computer whether the animal may be milked. If the animal 8 is in need of being milked, the computer-controlled entrance doors 21 are opened and the animal can go into the cleaning box 19, where the animal's teats are then cleaned automatically. After this has been completed and then, on a rotary platform 1, in front of the entrance 17, a milking parlour 2 is free, the computer-controlled entrance door 21 is opened and the animal 8 can take its position in the respective milking parlour 2. At the time of entering the milking parlour, or after the animal has entered the milking parlour 2, the rotary platform is or will be put into operation and the milking parlour 2 is made to rotate clockwise, as viewed from above. At the same moment, the positions of the animal's teats are determined by means of the detector fitted on the milking robot 15, while, on the rail track 16, the milking robot 15 moves along with the milking parlour 2. After the animal's teat positions have been found and the milking robot 15 has been coupled to the load-bearing arm 10, the teat cups 9 are put underneath the teats and sequentially or simultaneously connected to the animal's teats. Subsequently, the milking robot 15 is uncoupled from the load-bearing arm 10 and, moving along the rail track, returned to the position of departure, whereupon a subsequent load-bearing arm 10 can be gripped for connecting other teat cups 9. During the milking of an animal, the rotary platform 1 can remain moving or be halted at times in order to make a new animal 8 take its position in a milking parlour 2 which has become free.

After it has been detected, for instance, by means of a sensor, that the udder or a quarter of the udder has been milked out, a teat cup 9 or teat cups 9 is/are automatically disconnected by means of disconnecting means and the load-bearing arm 10 including the teat cups 9 is swung out of the milking parlour 2. After this, the animal 8 can leave the rotary platform 1 when the milking parlour 2 has turned to opposition to the exit 22. Using a (non-shown) cleaning implement, the teat cups 9 can be cleaned before the milking parlour 2 is turned to opposite the entrance 17, whereafter a subsequent animal 8 can take its position in the milking parlour 2 in order to be milked.

In the exemplary embodiment of the invention according to Figure 2, milking, connecting teat cups 9 and cleaning the teats of the animal 8 proceed in the same manner as described above, though with the exception that connection can be effected in a shorter time as a result of the application of, for instance, a more quick-acting, more expensive milking robot 15.

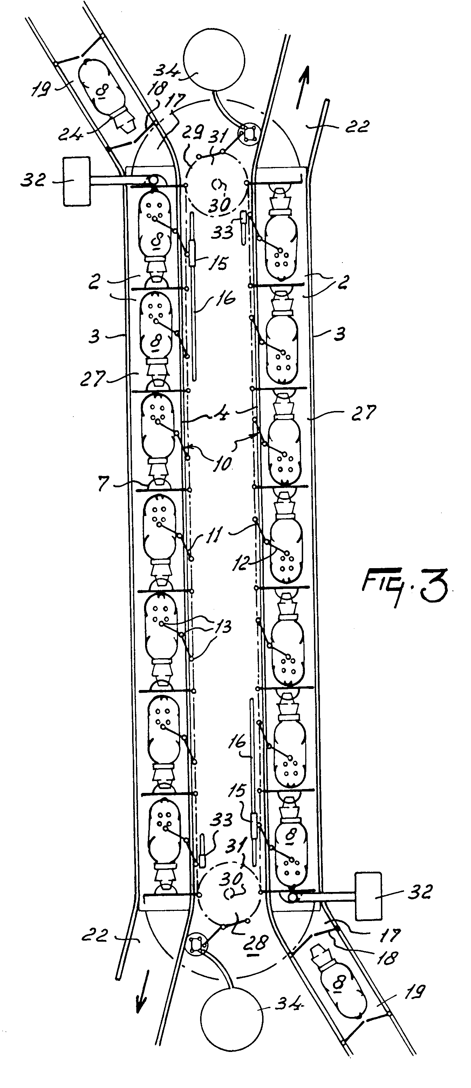

Figure 3 shows a plan view of a fourth exemplary embodiment of the construction according to the invention, where the movable floor is made in the form of two moving-carpet floors 27 disposed at a certain distance from each other. The moving-carpet floor 27 is bounded on its sides by a fixed outer wall and a fixed inner wall 4, each being designed as a fencing in the present exemplary embodiment. In between the inner walls 4 of the moving-carpet floors 27 there is provided a conveyor belt 28 for the teat cups 9. The conveyor 28 comprises a cable or belt 29 which is fitted round two pulleys 31 mounted on vertical shafts 30 at a certain mutual distance. The first shaft 30 is mounted near one end of a moving-carpet floor 27 and the second shaft 30 is mounted near the other end of a moving-carpet floor 27. On the cable or belt 29 there are disposed the load-bearing arms 10 for the teat cups 9 at a fixed mutual distance as well as, at equal mutual distances, front walls 5 and rear walls 6 of the milking parlours 2. Each of the front walls 5 is at the same time the rear wall of a connected milking parlour 2, and is provided with a feed trough 7, as is also the case in the foregoing exemplary embodiments. Through a concentrates-proportioning system 32 installed near the entrance 17 to the moving-carpet floor 27, an amount of foods metered for a given animal can be dispensed into each of the feed troughs 7.

Near the entrance 17, a rail track 16 is mounted parallel to the inner wall 4 of a moving-carpet floor 27, along which rail track 17 the milking robot 15 is capable of being moved forwards and backwards. The length of the rail track 16 amounts to approximately the length of two milking parlours 2. Furthermore, near the exit 22 of a moving-carpet floor 27, there is disposed a cleaning implement 34 for cleaning the teat cups 9. In addition, the construction comprises, near the entrance 17 to the moving-carpet floor 27, a cleaning box 19 for cleaning the teats of an animal 8 to be milked. As is also the case in the foregoing exemplary embodiments, the cleaning-box 19 is provided with computer-controlled entrance doors 18 and 21. In the present exemplary embodiment, near the exit 22 from a moving-carpet floor 27 and parallel to the inner wall 4, there are placed disconnecting means 33, with the aid of which the teat cups 9 at the end of the moving-carpet floor 27 can be automatically disconnected from the teats of an animal 8. As is also the case in the foregoing exemplary embodiments, the disconnecting means 33 can also be designed as computer-controlled stepping motors disposed under the vertical hinge pins 13, enabling the teat cups 9 to be disconnected in any position on a moving-carpet floor 27. Moreover, it is possible to apply the disconnecting means 33, as described and as drawn in Figure 3, in the exemplary embodiments in accordance with Figures 1 and 2.

Furthermore, it is feasible to make use of only a single moving-carpet floor 27. The number of milking parlours 2 on a moving-carpet floor 27 is dependent on the length of the moving-carpet floor 27 and the number of milking clusters placed on the conveyor belt 28 and it is thus determined by the options chosen.

The operation of the construction in accordance with Figure 3 is as follows.

After the identity of the animal has been established by means of the animal identification system and the computer has decided that the animal may be milked, the computer-controlled entrance door 21 to the cleaning box 19 is opened, whereupon the animal can take its position in the cleaning box 19, where the teats of the animal will be cleaned. After the teats have been cleaned and when there is a free milking parlour 2 in front of the entrance 17, a computer-controlled entrance door 18 to the respective moving-carpet floor 27 is opened, whereupon the animal can take its position in the relevant milking parlour 2. Simultaneously with the entry into the milking parlour 2 or shortly afterwards, the moving-carpet floor 27 is put in motion and, with the moving-carpet floor 27, the animal 8 is moved in the direction of the exit 22. After the milking robot 15 has seized the load-bearing arm, the positions of the teats are determined by means of a detector mounted on the robot 15. After this, the teat cups 9 are put to underneath the animal's teats by means of the milking robot 15, whereupon the teat cups 9 are sequentially or simultaneously connected to the teats. The milking robot 15 is moved along the rail track 16 simultaneously with the movement of the animal 8, all this lasting just as long as it takes to connect all teat cups 9 to the teats of the animal 8 to be milked. After the teat cups have been connected, the milking robot 15 is disconnected from the load-bearing arm 10 and returned to the position of departure via the rail track 16, whereupon another milking cluster can be connected to a subsequent animal by means of the milking robot 15. During milking and the stay in the milking parlour 2, the animal 8, with the moving-carpet floor 27, is moved in the direction of the exit 22. When an udder quarter has been milked out, a teat cup 9 can be disconnected individually, or when the udder is empty, the teat cups can be disconnected simultaneously, just as the case may be in the foregoing exemplary embodiments. A milked animal 8 can leave the moving-carpet floor 27 when the milking parlour 2 has arrived at the exit 22. After the animal 8 has left the milking parlour 2, the teat cups 9 are cleaned with cleaning means 34, whereupon they are moved along the pulley 31 to the adjacent moving-carpet floor 27, where, by means of the milking robot 15, they can be connected to an animal 8 to be milked.

## Claims

1. A construction including an implement for milking animals (8), using one or more milking robots (15), and a movable floor, characterized in that, dependent on the capacity of the milking robots (15), the speed at which the floor moves is automatically variable or the motion can be halted, as the case may be, while furthermore the milking robot (15) is placed next to the movable floor and is capable of being moved reciprocatingly along a part of the movable floor.

2. A construction according to claim 1, characterized in that the distance over which the milking robot (15) is movable amounts to approximately the length of two milking parlours (2).

3. A construction according to claim 1 or 2, characterized in that the entrance to the movable floor is provided near the location where the milking robot (15) is placed.

4. A construction according to claim 3, characterized in that the entrance is provided with a computer-controlled entrance door (18).

5. A construction according to claim 3 or 4, characterized in that near the entrance there is provided at least one cleaning box (19) for cleaning the teats of an animal (8).

6. A construction according to claim 5, characterized in that near the entrance (17) there are provided two cleaning boxes (19) situated side by side.

7. A construction according to any one of the preceding claims, characterized in that the implement comprises a rotary platform (1) provided with at least one milking parlour (2) as well as a cleaning box (19) for automatically cleaning the animal (8), or at least the teats.

8. A construction according to any one of the preceding claims, characterized in that the construction comprises a number of milking parlours (2) as well as a number of detectors for determining the teat positions of an animal (8), with the number of milking parlours (2) being equal or approximately equal to the number of detectors.

9. A construction according to any one of the preceding claims, characterized in that there is provided, for cleaning the animal (8), or at least the teats, at least one cleaning box (19) linked up with the movable floor.

10. A construction according to any one of the preceding claims, characterized in that the movable floor is bounded on both sides or on one side by a stationary or fixed wall (3, 4).

11. A construction according to claim 10, characterized in that the walls (3, 4) are designed as a fencing.

12. A construction according to any one of the preceding claims, characterized in that a milking parlour (2) is on the front side and on the rear side bounded by a wall (5, 6) which is moved along with the movable floor.

13. A construction according to claim 12, characterized in that the wall (15) at the front side of a milking parlour (2) comprises a feed trough (7).

14. A construction according to any one of the preceding claims, characterized in that a milking parlour (2) is provided with teat cups (9) capable of being connected automatically to the teats of an animal (8) by means of a milking robot (15).

15. A construction according to claim 14, characterized in that the milking parlour (2) is provided with disconnection means for automatically disconnecting the teat cups (9) simultaneously or individually.

16. A construction according to claim 14 or 15, characterized in that the teat cups (9) are placed on a load-bearing arm (10) which is capable of being swung underneath the animal (8) and which is carried by the movable floor.

17. A construction according to claim 15 or 16, characterized in that the teat cups (9) are placed on a movable conveyor (1, 27).

18. A construction according to any one of claims 14 to 17, characterized in that the construction is provided with cleaning means (34) for cleaning the teat cups (9).

19. A construction according to any one of the preceding claims, characterized in that the construction is provided with an animal identification system comprising transponders (24) disposed on the animals (8).

20. A construction according to any one of the preceding claims, characterized in that the movable floor is designed as a milking carrousel (1).

21. A construction according to any one of claims 1 to 19, characterized in that the movable floor is designed as a moving-carpet floor (27).

22. A construction according to claim 21, characterized in that the construction comprises two moving-carpet floors (27) disposed side by side at a certain distance from each other.

23. A construction according to claim 21 or 22, characterized in that on one end of the moving-carpet floor (27) there is provided the entrance (17), whereas the exit (22) is provided at the other end.

24. A construction according to any one of the preceding claims, characterized in that the implement is suitable for milking a herd of about 1,000 cows and/or for approximately 3,000 milkings per 24 hours.

25. A construction according to any one of the preceding claims, characterized in that the construction comprises a shed wherein the implement for milking animals (8) is installed, with this shed being designed as a loose house.

26. A construction according to any one of the preceding claims, characterized in that the implement comprises a computer-controlled concentrates-proportioning system (32) suitable for individually dispensing a defined amount of feeds to each animal (8).

## Patentansprüche

1. Anlage mit einer Vorrichtung zum Melken von Tieren (8) unter Verwendung eines oder mehrerer Melkroboter (15) und mit einem beweglichen Boden,
dadurch gekennzeichnet, daß in Abhängigkeit von der Kapazität der Melkroboter (15) die Geschwindigkeit, mit der sich der Boden bewegt, je nach Bedarf automatisch zu verändern oder die Bewegung anzuhalten ist, wobei außerdem der Melkroboter (15) nahe dem beweglichen Boden angeordnet und entlang eines Teiles des beweglichen Bodens hin- und herzubewegen ist.

2. Anlage nach Anspruch 1,
dadurch gekennzeichnet, daß die Distanz, über die der Melkroboter (15) bewegbar ist, etwa der Länge von zwei Melkständen (2) entspricht.

3. Anlage nach Anspruch 1 oder 2,
dadurch gekennzeichnet, daß sich der Eingang zu dem beweglichen Boden nahe der Stelle befindet, an der der Melkroboter (15) angeordnet ist.

4. Anlage nach Anspruch 3,
dadurch gekennzeichnet, daß der Eingang mit einer rechnergesteuerten Eingangstür (18) versehen ist.

5. Anlage nach Anspruch 3 oder 4,
dadurch gekennzeichnet, daß nahe dem Eingang mindestens eine Reinigungsbox (19) zum Reinigen der Zitzen eines Tieres (8) angeordnet ist.

6. Anlage nach Anspruch 5,
dadurch gekennzeichnet, daß nahe dem Eingang (17) zwei Reinigungsboxen (19) nebeneinander angeordnet sind.

7. Anlage nach einem der vorhergehenden Ansprüche,
dadurch gekennzeichnet, daß die Vorrichtung eine drehbare Plattform (1) mit mindestens einem Melkstand (2) und eine Reinigungsbox (19) zum automatischen Reinigen des Tieres (8) oder zumindest der Zitzen aufweist.

8. Anlage nach einem der vorhergehenden Ansprüche,
dadurch gekennzeichnet, daß die Anlage mehrere Melkstände (2) sowie mehrere Detektoren zur Ermittlung der Zitzenpositionen eines Tieres (8) aufweist, wobei die Anzahl der Melkstände (2) gleich oder annähernd gleich der Anzahl der Detektoren ist.

9. Anlage nach einem der vorhergehenden Ansprüche,
dadurch gekennzeichnet, daß zum Reinigen des Tieres (8) oder zumindest der Zitzen mindestens eine mit dem beweglichen Boden verbundene Reinigungsbox (19) vorgesehen ist.

10. Anlage nach einem der vorhergehenden Ansprüche,
dadurch gekennzeichnet, daß der bewegliche Boden auf beiden Seiten oder auf einer Seite durch eine stationäre oder feststehende Wand (3, 4) begrenzt ist.

11. Anlage nach Anspruch 10,
dadurch gekennzeichnet, daß die Wände (3, 4) als Umzäunung ausgeführt sind.

12. Anlage nach einem der vorhergehenden Ansprüche,
dadurch gekennzeichnet, daß ein Melkstand (2) an der Vorder- und an der Rückseite durch eine Wand (5, 6) begrenzt ist, die gemeinsam mit dem beweglichen Boden bewegt wird.

13. Anlage nach Anspruch 12,
dadurch gekennzeichnet, daß die Wand (5) an der Vorderseite eines Melkstandes (2) einen Futtertrog (7) aufweist.

14. Anlage nach einem der vorhergehenden Ansprüche,
dadurch gekennzeichnet, daß ein Melkstand (2) mit Zitzenbechern (9) versehen ist, die mittels eines Melkroboters (15) automatisch an die Zitzen eines Tieres (8) anschließbar sind.

15. Anlage nach Anspruch 14,
dadurch gekennzeichnet, daß der Melkstand (2) eine Abnahmevorrichtung zur gemeinsamen oder einzelnen Abnahme der Zitzenbecher (9) aufweist.

16. Anlage nach Anspruch 14 oder 15,
dadurch gekennzeichnet, daß die Zitzenbecher (9) an einem Tragarm (10) angeordnet sind, der unter das Tier (8) schwenkbar und auf dem beweglichen Boden abgestützt ist.

17. Anlage nach Anspruch 15 oder 16,
dadurch gekennzeichnet, daß die Zitzenbecher (9) auf einer Fördereinrichtung (1, 27) angeordnet sind.

18. Anlage nach einem der Ansprüche 14 bis 17,
dadurch gekennzeichnet, daß die Anlage eine Reinigungsvorrichtung (34) zum Reinigen der Zitzenbecher (9) aufweist.

19. Anlage nach einem der vorhergehenden Ansprüche,
dadurch gekennzeichnet, daß die Anlage mit einem Tieridentifikationssystem ausgestattet ist, das auf den Tieren (8) angeordnete Transponder (24) umfaßt.

20. Anlage nach einem der vorhergehenden Ansprüche,
dadurch gekennzeichnet, daß der bewegliche Boden als Melkkarussell (1) ausgeführt ist.

21. Anlage nach einem der Ansprüche 1 bis 19,
dadurch gekennzeichnet, daß der bewegliche Boden als Rollbahn (27) ausgeführt ist.

22. Anlage nach Anspruch 21,
dadurch gekennzeichnet, daß die Anlage zwei Rollbahnen (27) aufweist, die in einem bestimmten Abstand voneinander nebeneinander angeordnet sind.

23. Anlage nach Anspruch 21 oder 22,
dadurch gekennzeichnet, daß an einem Ende der Rollbahn (27) ein Eingang (17) angeordnet ist, während sich der Ausgang (22) am anderen Ende befindet.

24. Anlage nach einem der vorhergehenden Ansprüche,
dadurch gekennzeichnet, daß die Vorrichtung zum Melken einer Herde von etwa 1.000 Kühen und/oder für etwa 3.000 Melkvorgänge in 24 Stunden ausgelegt ist.

25. Anlage nach einem der vorhergehenden Ansprüche,
dadurch gekennzeichnet, daß die Anlage einen Stall aufweist, in dem die Vorrichtung zum Melken von Tieren (8) installiert ist, wobei dieser Stall als Laufstall ausgeführt ist.

26. Anlage nach einem der vorhergehenden Ansprüche,
dadurch gekennzeichnet, daß die Melkvorrichtung ein rechnergesteuertes Kraftfutterzuteilungssystem (32) aufweist, das in der Lage ist, jedem Tier (8) eine bestimmte Menge an Futter einzeln zuzuteilen.

## Revendications

1. Installation comportant un système de traite des animaux (8), utilisant un ou plusieurs robots de traite (15), et un plancher mobile, caractérisée en ce que, en fonction de la capacité des robots de traite (15), la vitesse à laquelle le plancher se déplace est automatiquement variable ou le mouvement peut être arrêté, selon le cas, alors qu'en outre le robot de traite (15) est placé à proximité du plancher mobile et peut être déplacé en va-et-vient le long d'une partie du plancher mobile.

2. Installation selon la revendication 1, caractérisée en ce que la distance sur laquelle le robot de traite (15) est mobile est approximativement la longueur de deux boxes de traite (2).

3. Installation selon la revendication 1 ou 2, caractérisée en ce que l'entrée vers le plancher mobile est agencée à proximité de l'emplacement où le robot de traite (15) est placé.

4. Installation selon la revendication 3, caractérisée en ce que l'entrée est munie d'une porte d'entrée commandée par ordinateur (18).

5. Installation selon la revendication 3 ou 4, caractérisée en ce qu'à proximité de l'entrée est agencé au moins un box de nettoyage (19) pour nettoyer les trayons d'un animal (8).

6. Installation selon la revendication 5, caractérisée en ce qu'à proximité de l'entrée (17) sont agencés deux boxes de nettoyage (19) situés côte à côte.

7. Installation selon l'une quelconque des revendications précédentes, caractérisée en ce que la réalisation comporte une plate-forme rotative (1) munie d'au moins un box de traite (2) ainsi que d'un box de nettoyage (19) pour nettoyer automatiquement l'animal (8), ou au moins les trayons.

8. Installation selon l'une quelconque des revendications précédentes, caractérisée en ce que l'installation comporte plusieurs boxes de traite (2) ainsi que plusieurs détecteurs pour déterminer les positions des trayons d'un animal (8), le nombre de boxes de traite (2) étant égal ou approximativement égal au nombre de détecteurs.

9. Installation selon l'une quelconque des revendications précédentes, caractérisée en ce qu'est fourni, pour le nettoyage de l'animal (8), ou au moins des trayons, au moins un box de nettoyage (19) relié au plancher mobile.

10. Installation selon l'une quelconque des revendications précédentes, caractérisée en ce que le plancher mobile est délimité sur les deux côtés ou sur un côté par une paroi stationnaire ou fixe (3, 4).

11. Installation selon la revendication 10, caractérisée en ce que les parois (3, 4) sont conçues sous la forme de barrières.

12. Installation selon l'une quelconque des revendications précédentes, caractérisée en ce qu'un box de traite (2) est délimité sur le côté avant et sur le côté arrière par une paroi (5, 6) qui se déplace avec le plancher mobile.

13. Installation selon la revendication 12, caractérisée en ce que la paroi (15) située au niveau du côté avant d'un box de traite (2) comporte une goulotte d'alimentation (7).

14. Installation selon l'une quelconque des revendications précédentes, caractérisée en ce qu'un box de traite (2) est muni de gobelets trayeurs (9) pouvant être reliés automatiquement aux trayons d'un animal (8) par l'intermédiaire d'un robot de traite (15).

15. Installation selon la revendication 14, caractérisée en ce que le box de traite (2) est muni de moyens de déconnexion pour déconnecter automatiquement les gobelets trayeurs (9) simultanément ou individuellement.

16. Installation selon la revendication 14 ou 15, caractérisée en ce que les gobelets trayeurs (9) sont placés sur un bras de support de charge (10) qui peut basculer en dessous de l'animal (8) et qui est supporté par le plancher mobile.

17. Installation selon la revendication 15 ou 16, caractérisée en ce que les gobelets trayeurs (9) sont placés sur un convoyeur mobile (1, 27).

18. Installation selon l'une quelconque des revendications 14 à 17, caractérisée en ce que l'installation est munie de moyens de nettoyage (34) pour nettoyer les gobelets trayeurs (9).

19. Installation selon l'une quelconque des revendications précédentes, caractérisée en ce que l'installation est munie d'un système d'identification d'animal comportant des transpondeurs (24) disposés sur les animaux (8).

20. Installation selon l'une quelconque des revendications précédentes, caractérisée en ce que le plancher mobile est conçu sous la forme d'un carrousel de traite (1).

21. Installation selon l'une quelconque des revendications 1 à 19, caractérisée en ce que le plancher mobile est conçu sous la forme d'un plancher formant tapis mobile (27).

22. Installation selon la revendication 21, caractérisée en ce que l'installation comporte deux planchers formant tapis mobile (27) disposés côte à côte à une certaine distance l'un de l'autre.

23. Installation selon la revendication 21 ou 22, caractérisée en ce que, sur une première extrémité du plancher formant tapis mobile (27), est agencée l'entrée (17), alors que la sortie (22) est agencée à l'autre extrémité.

24. Installation selon l'une quelconque des revendications précédentes, caractérisée en ce que la réalisation est adaptée pour traire un troupeau d'environ 1000 vaches et/ou pour approximativement 3000 traites par 24 heures.

25. Installation selon l'une quelconque des revendications précédentes, caractérisée en ce que l'installation comporte une étable dans laquelle la réalisation pour traire les animaux (8) est installée, cette étable étant conçue sous la forme d'un hangar ouvert.

26. Installation selon l'une quelconque des revendications précédentes, caractérisée en ce que la réalisation comporte un système de dosage de concentrés commandé par ordinateur (32) adapté pour distribuer individuellement une quantité d'aliments définie à chaque animal (8).
